# EUROPEAN PATENT SPECIFICATION

(11) **EP 2 921 779 B1**
(45) Date of publication and mention of the grant of the patent: **06.12.2017**
(21) Application number: 14160407.4
(22) Date of filing: 18.03.2014
(51) Int. Cl.: F23R 3/46, F23R 3/06, F23R 3/00

(54) **Combustion chamber with cooling sleeve**
Brennkammer mit Kühlhülse
Chambre de combustion avec manchon de refroidissement

(43) Date of publication of application: 23.09.2015
(73) Proprietor: Ansaldo Energia Switzerland AG, 5401 Baden (CH)
(72) Inventor: Maurer, Michael Thomas, 79713 Bad Säckingen (DE); Benz, Urs, 5073 Gipf-Oberfrick (CH); Bunkute, Birute, 5415 Nussbaumen (CH)
(74) Representative: Bernotti, Andrea

(56) References cited:
- EP-A1- 1 508 680
- EP-A2- 1 983 266
- EP-A2- 2 527 738
- WO-A1-02/088601
- CH-A- 259 927
- US-A1- 2009 272 124
- US-A1- 2012 060 504
- US-A1- 2012 247 111

## Description

### Technical field

The disclosure refers to a cooling arrangement for a combustion chamber, more particularly to an arrangement with a cooling sleeve guiding cooling gas along the walls of a combustion chamber.

### Background of the disclosure

The thermodynamic efficiency of power generating cycles depends on the maximum temperature of its working fluid which, in the case for example of a gas turbine, is maximum temperature of the hot gas exiting the combustor. The maximum feasible temperature of the hot gas is limited by combustion emissions as well as by the operating temperature limit of the metal parts in contact with this hot gas, and on the ability to cool these parts below the their metal temperature limit. The cooling of the hot gas duct walls forming the hot gas flow paths of advanced heavy duty gas turbines is difficult and currently known cooling methods carry performance penalties, i.e. lead to a reduction in power and efficiency.

Cooling of combustor walls exposed to the hot combustion gases is critical to assure life time of the gas turbine. Cooling sleeves for guiding cooling gas along the walls of combustion chambers have been suggested. For example a combination of sleeves to guide the cooling gas along the combustion chamber with impingement cooling has been disclosed in the EP13190131. For impingement cooling of a duct a sleeve is disposed a short distance away from the duct's outer surface. The impingement sleeve contains an array of holes through which compressed cooling gas discharges to generate an array of air jets which impinge on and cool the outer surface of the duct. After impingement the cooling gas flows in a cooling path delimited by the duct and the impingement sleeve towards one end of the duct. The impingement cooling has to be provided from all circumferential directions around the combustion chamber. The supply of sufficient cooling gas to feed the sleeve cooling can be difficult due to space constraints in the plenum surrounding a combustor arrangement in a gas turbine. These space constrains can lead to small cross sections in the supply channels for the sleeve cooling which in turn increase the pressure drop of the cooling arrangement. The increased pressure drop leads to corresponding high cooling gas supply pressure requirements which can be detrimental to the overall performance of the gas turbine.

EP 2 527 738 A2 discloses a gas turbine having a combustion chamber comprising a sleeve section which is at least partly enclosing a duct wall, through which a hot gas flows. A cooling gas is guided in a channel between the sleeve section and the duct wall along the outer surface of the duct wall. In one embodiment, the sleeve section has a single cooling gas inlet opening facing away from the duct wall.

Other examples of known combustion chamber are disclosed in US 2009/272124 A1, in US 2012/060504 A1, in US 2012/247111 A1, in EP 1 508 680 A1, in WO 02/088601 A1 and in CH 259 927 A.

### Summary of the disclosure

The object of the present disclosure is to propose a combustion chamber which allows efficient cooling of a duct wall with a low pressure drop in the cooling gas flow.

According to the present invention, a combustion chamber is provided as defined in claim 1.

In this context a combustion chamber can comprise the section of a combustor in which the combustion takes place. It can also comprise the so called transition zone. This is a region downstream of the main combustion zone in which the cross sectional area of the combustor is progressively reduced in the downstream direction between the main combustion zone and the outlet guiding the hot gas flow towards the turbine inlet.

The cooling gas can be air which has been compressed by a compressor of a gas turbine if the combustor is installed in an air breathing gas turbine. It can be any other gas or mixture of gases. For example it can be a mixture of air and flue gases for a gas turbine with flue gas recirculation into the compressor inlet.

The disclosed combustion chamber comprises a sleeve section which is at least partly enclosing a duct wall also called combustion chamber wall for guiding a cooling gas in a channel between the sleeve section and the duct wall along the outer surface of the duct wall. The duct wall itself is guiding a hot gas flow in a hot gas flow path having an upstream end and a downstream end during operation. The sleeve section has one main inlet opening, which is facing away from the duct wall for supplying cooling gas into the cooling channel. The cross sectional area of the main inlet opening is larger than 70% of the sum of the cross sections of all cooling openings to the sleeve section.
In a further embodiment the cross sectional area of the main inlet opening is even larger than 80% of the sum of the cross sections of all cooling openings to the sleeve section

When installed in a gas turbine the singe main inlet opening of the combustion chamber can be orientated so that it faces a region in a compressor plenum in which the highest pressure prevails and which is sufficiently feed by cooling gas to feed the cooling channel between the sleeve and the duct wall.

According to a specific embodiment the main inlet opening is the only cooling opening to the sleeve section.

According to a further embodiment of the combustion chamber the main inlet opening is orientated to one side of the combustor. One side in this context means for example in case of a combustion chamber with a rectangular or trapezoidal cross section that the main inlet opening is only facing away from one side of the combustion chamber and the other three sides are closed. In case of a practically cylindrical or oval the one opening opens in a direction with an opening angle which can for example be less than 90° or less than 60° relative to a longitudinal axis of the combustion chamber. The main inlet opening can for example face towards the axis of a gas turbine when installed.

According to another embodiment of the combustion chamber an orientation of the main inlet opening is normal to an axial extension of the combustor.

To allow for a good distribution of the cooling gas in the cooling channel between the sleeve and the duct wall several advantageous geometrical forms of the main inlet opening are feasible. According to one embodiment the main inlet opening has a circular shape.

The circular shape can be used to equally distribute cooling gas in all directions from the inlet opening.

According to another embodiment of the combustion chamber the main inlet opening has a rectangular shape.

The rectangular main inlet opening can be arranged with the larger extension perpendicular to the axial extension of the combustion chamber.

According to yet another embodiment of the combustion chamber the main inlet opening has a triangular shape.

The triangular shape can for example have a base which is orientated perpendicular to the axial extension of the combustion chamber and the two other sides extending under an angle in an upstream direction, i.e. a height of the triangular main inlet opening is parallel to the axial extension of the combustor. Cooling gas can be feed side wards and in upstream direction from these two sides orientated in upstream directions.

According to still another embodiment the main inlet opening has a kidney like shape.

The kidney shaped cooling opening can have a base line connecting two circular enlargements of the main inlet opening wherein the baseline is extending in a circumferential direction on the surface of the duct wall normal to the axial extension of the combustor.

In other words a long side of the kidney like shape can extend perpendicular to the axial extension of the combustion chamber. The cross section of the kidney like shape increases towards the sides of the combustion chamber thus allowing a large flow of cooling gas to both sides of the combustion chamber, which can be advantageous to supply the cooling gas to the cooling channel section opposite of the main inlet opening.

In a further embodiment of the combustion chamber the height of the cooling channel between the sleeve and the duct wall is decreasing in circumferential direction around a combustion chamber and/or axial direction of the combustion chamber from the main inlet opening. With increasing distance from the main inlet opening the effective flow area increases if the height of the flow channel is constant. To keep the flow velocity in the channel constant the height of the flow channel has to be reduced with increasing distance from the main inlet opening until the cooling gas is distributed around the combustor wall in circumferential direction relative to the axial extension of the combustion chamber.

The height of the cooling channel can for example be a linear function of the distance from the geometrical center of the main inlet opening until a minimum height is reached. After reaching the minimum height the height can be kept constant. After a minimum height has been reached the channel height can also be increasing again to compensate for an increase in volume flow due to the heating of the cooling gas as it flows along the hot duct wall. The increase in channel height can be chosen such that the flow velocity is practically kept constant.

In yet a further embodiment of the combustion chamber the main inlet opening comprises a bellmouth to recover dynamic pressure of inflowing cooling gas during operation. Typically the incoming cooling gas in a compressor plenum of a gas turbine has a high velocity. The kinetic energy of the inflowing gas can at least partly be recovered and used to increase the static pressure of the cooling gas by the bellmouth.

In another embodiment of the combustion chamber heat transfer enhancers are applied on the duct wall. Alternatively or in combination heat transfer enhancers can be applied on the sleeve section. The heat transfer enhancers increase the heat transfer and cooling of the duct wall. A heat transfer enhancer on the duct wall facing the side of the cooling channel can typically increase the heat transfer better than a heat transfer enhancer on the sleeve. However, for manufacturing and cost reasons it can be advantageous to apply heat transfer enhancers on the sleeve.

A heat transfer enhancers can for example be a turbulator. Among many possible shapes a turbulator can have 90° bend, a V-shape, or a W-shaped to enhance heat transfer. In combination or alternatively pin fields or surface roughness can be applied as heat transfer enhancers.

In addition or in combination cooling gas can be supplied through secondary inlet openings to locally cool areas with high heat load or for which the convective cooling by the cooling gas in the cooling channel is not sufficient.

In addition or in combination impingement cooling holes can be used to locally cool areas with high heat load or for which the convective cooling by the cooling gas in the cooling channel is not sufficient or not suitable. According to one embodiment less than 20% of the available cooling mass flow for the duct wall is used for impingement cooling and/or secondary cooling. According to the invention, a rib for guiding the cooling gas is arranged in the channel between the sleeve and the duct wall. The rib at least partly extends in a circumferential direction around the combustor to guide cooling gas from the side of the main inlet opening to an opposite side of the combustor. Such a rib can for example extend circumferentially from the main inlet opening around the duct wall.

The rib can also part a cooling gas flow into two flow directions. For example the cooling flow can be split into a first partial flow in axial direction and a second axial flow in circumferential direction around the duct wall.

A rib can also be used to divert or bend a cooling gas flow. For example a flow can first be guided in circumferential direction around the combustor and then be redirected in a bend to a direction in counter flow to the main flow direction of hot gas in the combustion chamber.

In another embodiment of the combustion chamber an aperture is introduced in the rib to allow a cross flow from a first section of the cooling channel on one side of the rib to a second section of the cooling channel on the other side of the rib. Such an aperture can be advantageous if the pressure in the first section of the cooling channel is higher than in the second section. Such a pressure difference can for example be due to different distances from the main inlet opening to the aperture with different pressure drops on both sides of the rib. Such a cross flow can increase the pressure in the second section. Further, the temperature of the cooling gas traveling the shorter distance might be lower, thus a cross flow can help to equalize the temperature distribution around the duct wall.

Besides the combustion chamber a gas turbine comprising a compressor, a turbine and a combustor with a plurality of the above described combustion chambers is an object of the disclosure.

Such a gas turbine comprises a plurality of combustion chambers with a sleeve section which is at least partly enclosing a duct wall for guiding a cooling gas in a channel between the sleeve section and the duct wall along the outer surface of the duct wall. The duct wall itself is guiding a hot gas flow in a hot gas flow path having an upstream end and a downstream end during operation. The sleeve section has one main inlet opening, which is facing away from the duct wall. The cross sectional area of the main inlet opening is larger than 70% or larger than 80% of the sum of the cross sections of all cooling openings to the sleeve section. A rib according to claim 1 is also provided. According to a further embodiment the gas turbine comprises a plurality of combustion chambers which are circumferentially distributed around the axis of the gas turbine. The combustion chambers are arranged each with its main inlet opening facing towards the axis of the gas turbine. Further the gas turbine comprises a diffusor subsequent of the compressor with an outlet directed to the main inlet openings such that during operation of the gas turbine compressed gas leaving the diffusor impinges on the main inlet openings.

Due to such an arrangement the kinetic energy of the compressed gas leaving the compressor can at least partly be recovered in the main inlet opening to increase the static pressure of the cooling gas in the combustion chamber's cooling channel.

According to yet a further embodiment the gas turbine comprises a second diffusor for directing part of the compressor exit gas to the burners of the gas turbine. Thus the burners are optimally supplied with high pressure gas for combustion and good cooling of the combustor walls is assured.

The gas turbine can have a conventional combustor with one combustion chamber. The gas turbine can also comprise a sequential combustor arrangement with at least two combustion chambers arranged downstream of each other. In a sequential combustor arrangement one or both combustion chambers can be configured with a combustion chamber having a sleeve section which is at least partly enclosing a duct wall for guiding a cooling gas in a channel between the sleeve section and the duct wall along the outer surface of the duct wall. The duct wall itself is guiding a hot gas flow in a hot gas flow path having an upstream end and a downstream end during operation. The sleeve section of the first, respectively the second combustion chamber has one main inlet opening, which is facing away from the duct wall. The cross sectional area of the main inlet opening is larger than 70% or larger than 80% of the sum of the cross sections of all cooling openings to the sleeve section of the respective combustion chamber.

Different burner types can be used. For the first combustor so called EV burner as known for example from the EP 0 321 809 or AEV burners as known for example from the DE 195 47 913 can for example be used. Also a BEV burner comprising a swirl chamber as described in the European Patent application EP 12 189 388.7 can be used. In a can architecture a single or a multiple burner arrangement per can combustor can be used. Further, a flamesheet combustor as described in US 2004/0211186 can be used as first combustor.

### Brief description of the drawings

The disclosure, its nature as well as its advantages, shall be described in more detail below with the aid of the accompanying schematic drawings.

Referring to the drawings:
Fig. 1 shows a gas turbine with a compressor, a combustion arrangement, and a turbine which are not part of the present invention.
Fig. 2a shows a cut through A-A of two combustion chambers of Fig. 1.
Fig. 2b shows the static pressure distribution around the combustion chamber of Fig. 2a,
Fig. 3 shows a gas turbine with a compressor, a combustion arrangement with a combustion chamber with a cooling sleeve comprising a main inlet opening, and a turbine;
Fig. 4 shows a cut through B-B of a combustion chamber of Fig. 3;
Fig. 5 shows a gas turbine with a compressor, a combustion arrangement with a combustion chamber with a cooling sleeve comprising a main inlet opening, and a turbine;
Fig. 6 shows a cut through C-C of a combustion chamber of Fig. 5,
Fig. 7a, b, c, d shows a top view of cooling sleeve with different geometric shapes of the a main inlet opening;
Fig. 8a, b, c, d, e, f shows a perspective view of combustion chamber with different rib arrangements for guiding the cooling gas flow in the cooling channel between the duct wall and cooling sleeve.

### Embodiments of the disclosure

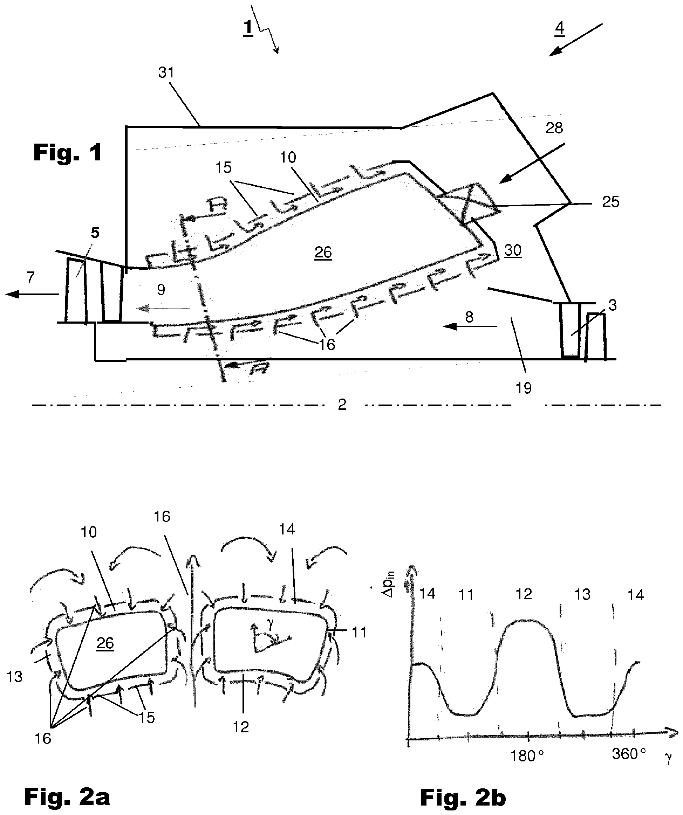

Fig. 1 shows a gas turbine 1 with an impingement cooled combustor 4. It comprises a compressor 3, a combustor 4, and a turbine 5.

Intake air 2 is compressed to compressed gas 8 by the compressor 3. Fuel 28 is burned with the compressed gas 8 in the combustor 4 to generate a hot gas flow 9. The hot gas 9 is expanded in the turbine 5 generating mechanical work.

The combustor 4 is housed in a combustor casing 31. The compressed gas 8 leaving the compressor 3 passes through a diffusor 19 for at least partly recovering the dynamic pressure of the gas leaving the compressor 3.

Typically, the gas turbine system includes a generator which is coupled to a shaft 2 of the gas turbine 1. The gas turbine 1 further comprises a cooling system for the turbine 5, which is not shown, as it is not the subject of this disclosure.

Exhaust gas 7 leaves the turbine 5. The remaining heat is typically used in a subsequent water steam cycle, which is also not shown here.

Fig. 1 shows a combustor 4 with an impingement cooling arrangement for cooling the duct wall 10. The combustor 4 comprises a burner 25 at the upstream end and a combustion chamber 26 extending from the burner to the downstream end. The combustion chamber 26 is delimited to the sides by the duct wall 10. For the impingement cooling a sleeve 15 comprising apertures for impingement cooling of the duct wall 10 is arranged around the combustion chamber 26. After the cooling gas 16 impinges on the duct wall 10 it flows in the cooling flow path formed by the duct wall 10 and the sleeve 15 towards the upstream end of the combustion chamber 26 in counter flow to the hot gas flow inside the combustion chamber 26. After cooling the duct wall 10 the cooling gas 15 can flow into the combustion chamber 26 at the upstream end of the hot gas flow path to be further used as combustion gas.

Fig. 2a shows the cut through section A-A of two neighboring combustion chambers 26 of Fig. 1 as an example of a plurality of combustion chambers 26 arranged circumferentially distributed around the axis of the gas turbine. The duct walls 10 of the combustion chambers are enclosed by the sleeve section 15. Each duct wall 10 defines the hot gas channel of on combustion chamber 26. In this example the cross section of the combustion chamber 26 is basically rectangular and enclosed by a cooling channel, which is delimited by the sleeve section 15. The channel has an inner channel side 12 facing in the direction of the axis of the gas turbine, a right channel side 11, a left channel side 13, and an outer channel side 14. All channel sides 11, 12, 13, 14 are impingement cooled with cooling gas 16. The cooling gas for cooling the left, right, and outer channel side 11, 13, 14 at least partly passes through a gap between the sleeves 15 of two neighboring combustion chambers 26. Due to space restrictions this gap can be small leading to high cooling gas 16 flow velocities in the gap. Due to these high flow velocities the static pressure in the gap is reduced. Thus the cooling gas 16 entering the left and right channel side 11, 13 has a reduced pressure. Further, the flow through this gap causes a pressure drop such that the cooling gas 16 leaving the gap and feeding the outer channel side 14 has a reduced total pressure.

The resulting static pressure distribution around the combustion chamber 26 of Fig. 2a is shown in Fig. 2b as a function of the angle γ in clockwise direction around the duct wall 10. Fig. 2b indicates that the pressure in the inner channel side 12 is higher than on the outer channel side 14. The cooling gas pressure on the left and right channel side is even lower than in the outer channel side 14. Due to the different pressure levels in the different channel sides cooling differs considerably for the different sections of the duct wall.

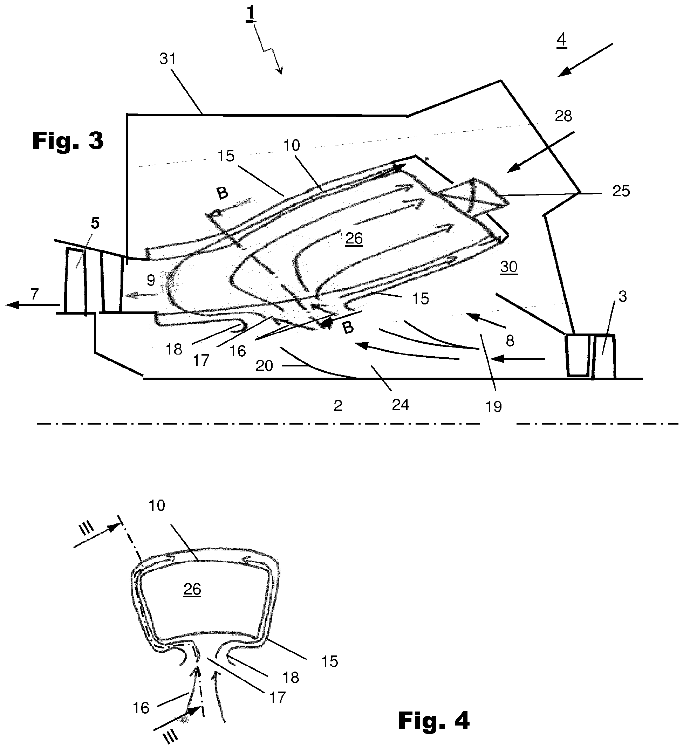

Fig. 3 is based on Fig. 1 but has a modified sleeve section 15 to reduce differences in cooling gas pressure and resulting differences in cooling gas flow around different sections of the duct wall 10. The sleeve section 15 has only one main inlet opening 17 for feeding the cooling channel surrounding the duct wall 10. The cut of the gas turbine 1 shown in Fig. 3 is not straight through but follows the contour of the duct wall 10 as indicated by the cut III - III in Fig. 4. Thus the streamlines of the cooling gas 16 flowing around the duct wall 10 can be shown in Fig. 3. For supplying the main inlet opening 17 with cooling gas 16 the compressor diffusor is divided into a first diffusor 19 which directs a large portion of the compressed gas 8 towards the burner 25, and a second diffusor 24 with a deflector 20, which directs the a portion of the compressed gas 8 towards the main inlet opening 17 for feeding the cooling channel surrounding the duct wall 10. In this example the main inlet opening 17 comprises a bellmouth 18 in which the remaining kinetic energy of the compressed gas leaving the second diffusor can be further recovered to increase the static pressure of the cooling gas 16 in the cooling channel.

The cross section B - B of the combustion chamber 26 in the region of the main inlet opening 17 is shown in Fig. 4. In this example the main inlet opening 17 is configured as a bellmouth 18 to recover dynamic pressure before the cooling gas 16 is guided in the channel between the duct wall 10 and the sleeve section 15 around the combustion chamber 26.

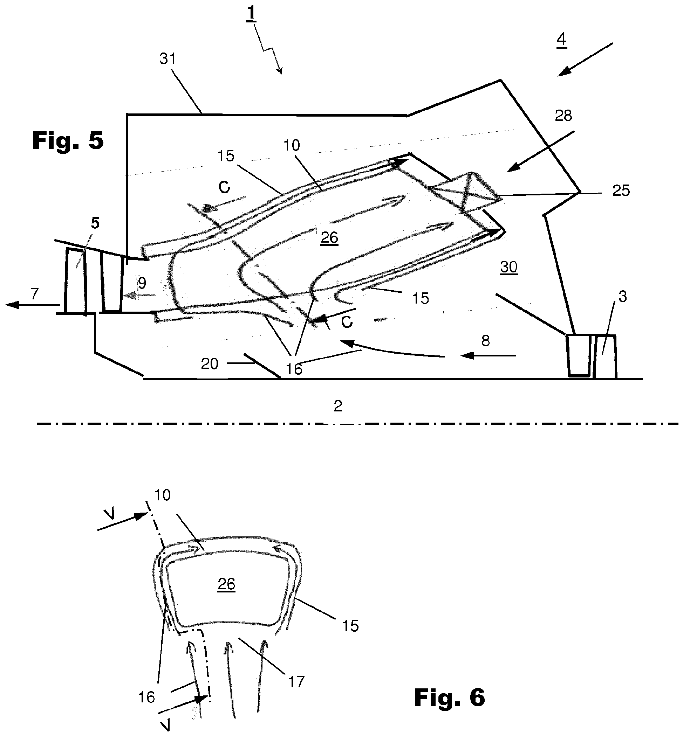

Fig. 5 shows another example of a gas turbine 1 according to the disclosure. The example of Fig. 5 is based on Fig. 3 but has only one compressor diffusor. For easy manufacturing the main inlet opening 17 is simply a hole in the wall of the sleeve section 15 without any aerodynamically contoured inlet. The gas turbine 1 further has only one compressor diffusor. Part of the compressed gas 8 is directed towards the main inlet opening 17 by a deflector 20.

The cut through the gas turbine 1 shown in Fig. 5 is also not straight but follows the contour of the duct wall 10 as indicated by the cut V - V in Fig. 6. Thus the streamlines of the cooling gas 16 flowing around the duct wall 10 can be shown in Fig. 5. The main inlet opening 17 of this example is larger than in the example of Fig. 3-4. It practically spans from one side of the duct wall 10 to the other side of the duct wall 10 as can be seen in Fig. 6 showing the cut through C-C of a combustion chamber 26 of Fig. 5,

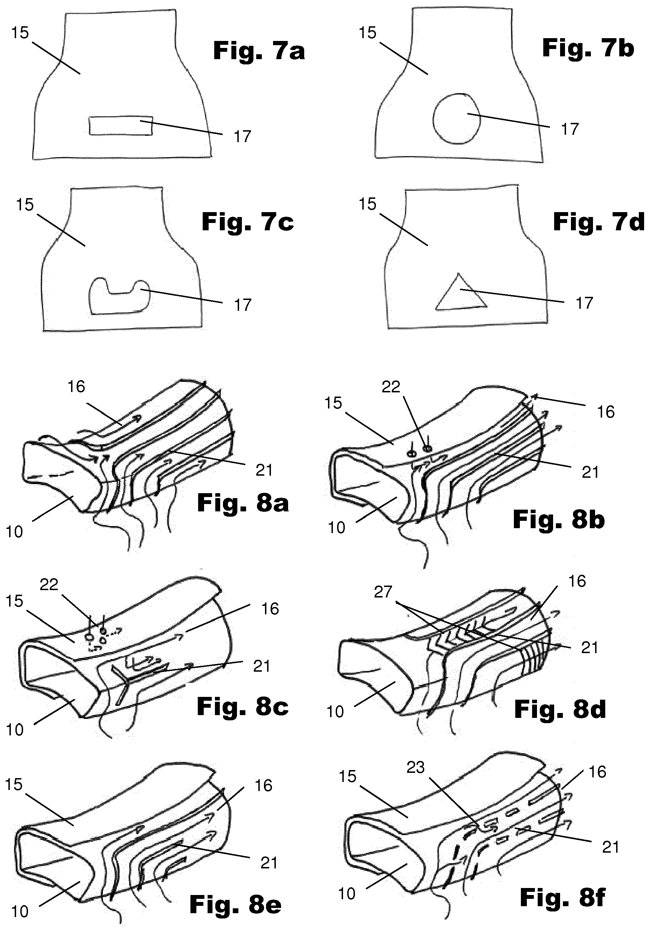

In a top view different examples of cooling sleeve sections 15 facing towards the axis of a gas turbine when installed with different geometric shapes of the a main inlet opening 17 are shown in Figs. 7a, b, c, and d.

Fig. 7a shows an example with a main inlet opening 17 having a rectangular shape. The larger side of the rectangular main inlet opening is spanning around the sleeve section 15 in a direction perpendicular to the hot gas flow inside the combustion chamber when in operation.

Fig. 7b shows an example with a main inlet opening 17 having a circular shape.

Fig. 7c shows an example with a main inlet opening 17 having a kidney like shape. The kidney like shape has its largest extension in a direction perpendicular to the hot gas flow inside the combustion chamber when in operation. At both ends of this largest extension the cross section of the main inlet opening expands into a circular shape. These expansions facilitate the supply of cooling gas to the side of the combustion chamber.

Fig. 7d shows an example with a main inlet opening 17 having the shape of an equilateral triangle. A height of the triangle is arranged parallel to the hot gas flow inside the combustion chamber when in operation.

Fig. 8a, b, c, d, e, and f show perspective views of examples for combustion chambers with different rib 21 arrangements for guiding the cooling gas 16 flow in the cooling channel between the duct wall and cooling sleeve.

Fig. 8a shows a top- side view of the duct wall 10 with guiding ribs 21 and indicates the cooling gas 16 flow between the ribs. The cooling gas 16 enters from below the cooling duct through the main inlet opening (not shown) and is guided around the duct wall 10. At the downstream end of the combustion chamber (for the hot gas during operation, left end in the Fig. 8) the ribs 21 extend mainly in circumferential direction around the side walls of the duct before the ribs 21 turn in an axial direction (counter to the hot gas flow. These ribs 21 serve to guide cooling gas 16 from the main inlet opening around the side walls of the combustion chamber to the top and further counter flow towards the upstream end of the combustion chamber (right end of the combustion chamber in Fig. 8). In addition a rib 21 is extending in flow direction in the upstream half of the side of duct wall 10.

The example of Fig. 8b is based on Fig. 8a. In addition a cut out of the sleeve section 15 is shown. In this example additional secondary inlet openings 22 are shown in the sleeve section on the outer side. These secondary inlet openings 22 can be applied to locally improve the supply of cooling gas 16 to the cooling channel. The secondary inlet openings 22 can be configured as impingement cooling holes to locally impingement cool the duct wall 10.

The example of Fig. 8c is based on Fig. 8b. Here the ribs 21 are y shaped with the single leg of the y directed upstream (relative to the hot gas flow in operation)

Fig. 8d shows another example based on Fig. 8a. To improve heat transfer to the cooling gas 16 turbulators 27 are arranged on the duct wall 10 where needed to locally improve the cooling. In this example turbulators 27 are added in a top region and in an upstream region of the side walls.

Fig. 8e shows another example based on Fig. 8a. In this example the ribs 21 on the side of the duct wall 10 do not extend all the way to the upstream end of the combustion chamber. The straight sections of the ribs 21 are not needed for guiding the cooling gas 16 flow in the upstream regions of this example. Manufacturing costs can be reduced by shorter ribs 21. In addition a cross flow is possible in the regions without the ribs.

Fig. 8f shows yet another example based on Fig. 8a. In this example the ribs 21 comprise apertures 23 which allow a cross flow. This cross flow can lead to a more homogeneous pressure distribution around the duct wall 10.

### List of designations

- 1: Gas Turbine
- 2: Axis
- 3: Compressor
- 4: Combustor
- 5: Turbine
- 7: Exhaust Gas
- 8: Compressed gas
- 9: Hot gas flow *Combustion Products*
- 10: Duct wall
- 11: Right channel side
- 12: Inner channel side
- 13: Left channel side
- 14: Outer channel side
- 15: Sleeve section
- 16: Cooling gas
- 17: Main inlet opening
- 18: Bellmouth
- 19: Diffusor
- 20: Deflector
- 21: Rib
- 22: Secondary inlet opening
- 23: Aperture
- 24: Second diffusor
- 25: Burner
- 26: Combustion chamber
- 27: Turbulator
- 28: Fuel
- 30: Compressor plenum
- 31: Combustor casing

## Claims

1. A combustion chamber (26) comprising a sleeve section (15) which is at least partly enclosing a duct wall(10) for guiding a cooling gas (16) in a channel between the sleeve section (15) and the duct wall(10) along the outer surface of the duct wall(10),wherein the duct wall(10) is guiding a hot gas flow (9) in a hot gas flow path having an upstream end and a downstream end during operation, **characterized in that** the sleeve section (15) has one main inlet opening (17) facing away from the duct wall (10) wherein the cross sectional area of the main inlet opening (17) is larger than 70% of the sum of the cross sections of all cooling openings to the sleeve section (15);
**characterized in that** a rib (21) for guiding the cooling gas (16) is arranged in the channel between the sleeve (15) and the duct wall (10), wherein the rib (21) at least partly extends in a circumferential direction around the combustor to guide cooling gas (16) from the side of the main inlet opening (17) to an opposite side of the combustor (4).

2. A combustion chamber (26) according to claim 1, **characterized in that** the main inlet opening (17) is the only cooling opening to the sleeve section (15).

3. A combustion chamber (26) according to claim 1 or 2, **characterized in that** the main inlet opening (17) is orientated to one side of the combustor (4).

4. A combustion chamber (26) according to one of the claims 1 to 3, **characterized in that** an orientation of the main inlet opening (17) is normal to an axial extension of the combustor (4).

5. A combustion chamber (26) according to one of the claims 1 to 4, **characterized in that** the main inlet opening (17) has one of a circular, rectangular, triangular or kidney like shape.

6. A combustion chamber (26) according to one of the claims 1 to 5, **characterized in that** starting from the main inlet opening (17) the height of the cooling channel between the sleeve (15) and the duct wall (10) is decreasing in circumferential direction around a combustion chamber and/or in axial direction of the combustion chamber.

7. A combustion chamber (26) according to one of the claims 1 to 6, **characterized in that** the main inlet opening (17) comprises a bellmouth (18) to recover dynamic pressure of inflowing cooling gas (16) during operation.

8. A combustion chamber (26) according to one of the claims 1 to 7, **characterized in that** a heat transfer enhancer is applied on the duct wall (10) and/or the sleeve section (15).

9. A combustion chamber (26) according to one of the claims 1 to 8, **characterized in that** the rib (21) diverts and/or bends the cooling gas path from a circumferential direction around the duct wall (10) to a direction in counter flow to the main flow direction of hot gas (9) in the combustion chamber.

10. A combustion chamber (26) according to one of the claims 1 to 9, **characterized in that** an aperture (23) is introduced in the rib (21) to allow a cross flow from a first section of the cooling channel on one side of a rib (21) to a second section of the cooling channel on the other side of the rib (21).

11. A gas turbine (1) comprising a compressor (3), a combustor arrangement (4), and a turbine (5) **characterized in that** the combustor arrangement (4) comprises a plurality of combustion chambers (26) according to one of the claims 1 to 10.

12. A gas turbine (1) according to claims 11, **characterized in that** the combustion chambers (26) are circumferentially distributed around the axis (2) of the gas turbine (1) with the main inlet openings (17) facing towards the axis (2) of the gas turbine (1), and **in that** it comprises a diffusor (19) subsequent of the compressor (3) with an outlet directed to the inlet main openings (17) such that during operation of the gas turbine (1) compressed gas leaving the diffusor (19) impinges on the main inlet opening (17).

13. A gas turbine (1) according to claims 11, **characterized in that** it comprises a second diffusor (24) for directing part of the compressor exit gas to the burners (25) of the gas turbine (1).

## Patentansprüche

1. Brennkammer (26), umfassend einen Hülsenabschnitt (15), der mindestens teilweise eine Kanalwand (10) umschließt, um ein Kühlgas (16) in einen Kanal zwischen dem Hülsenabschnitt (15) und der Kanalwand (10) entlang der Außenfläche der Kanalwand (10) zu leiten, wobei die Kanalwand (10) während des Betriebs einen Heißgasstrom (9) in einen Heißgasströmungsweg mit einem stromaufwärtigen und einem stromabwärtigen Ende leitet, **dadurch gekennzeichnet, dass** der Hülsenabschnitt (15) eine von der Kanalwand (10) abgewandte Haupteinlassöffnung (17) aufweist, wobei die Querschnittsfläche der Haupteinlassöffnung (17) größer ist als 70% der Summe der Querschnitte aller Kühlöffnungen des Hülsenabschnitts (15);
**dadurch gekennzeichnet, dass** in dem Kanal zwischen der Hülse (15) und der Kanalwand (10) eine Rippe (21) zur Leitung des Kühlgases (16) vorgesehen ist, wobei sich die Rippe (21) mindestens teilweise in einer Umfangsrichtung um die Brennkammer erstreckt, um das Kühlgas (16) von der Seite der Haupteinlassöffnung (17) zu einer dem Combustor (4) gegenüberliegenden Seite zu leiten.

2. Brennkammer (26) nach Anspruch 1, **dadurch gekennzeichnet, dass** die Haupteinlassöffnung (17) die einzige Kühlöffnung zu dem Hülsenabschnitt (15) ist.

3. Brennkammer (26) nach Anspruch 1 oder 2, **dadurch gekennzeichnet, dass** die Haupteinlassöffnung (17) zu einer Seite des Combustors (4) hin gerichtet ist.

4. Brennkammer (26) nach einem der Ansprüche 1 bis 3, **dadurch gekennzeichnet, dass** eine Ausrichtung der Haupteinlassöffnung (17) senkrecht zu einer axialen Ausdehnung des Combustors (4) verläuft.

5. Brennkammer (26) nach einem der Ansprüche 1 bis 4, **dadurch gekennzeichnet, dass** die Haupteinlassöffnung (17) kreisförmig, rechteckig, dreieckig oder nierenförmig ist.

6. Brennkammer (26) nach einem der Ansprüche 1 bis 5, **dadurch gekennzeichnet, dass** sich die Höhe des Kühlkanals zwischen der Hülse (15) und der Kanalwand (10) beginnend von der Haupteinlassöffnung (17) in Umfangsrichtung um eine Brennkammer und/oder in axialer Richtung der Brennkammer verringert.

7. Brennkammer (26) nach einem der Ansprüche 1 bis 6, **dadurch gekennzeichnet, dass** die Haupteinlassöffnung (17) einen Einlauftrichter (18) zur Rückgewinnung des dynamischen Drucks des während des Betriebs einströmenden Kühlgases (16) umfasst.

8. Brennkammer (26) nach einem der Ansprüche 1 bis 7, **dadurch gekennzeichnet, dass** an der Kanalwand (10) und/oder dem Hülsenabschnitt (15) ein den Wärmeübergang verbesserndes Element vorgesehen ist.

9. Brennkammer (26) nach einem der Ansprüche 1 bis 8, **dadurch gekennzeichnet, dass** die Rippe (21) den Kühlgasweg von einer Umfangsrichtung um die Kanalwand (10) in eine Richtung entgegengesetzt zur Hauptströmungsrichtung des Heißgases (9) in der Brennkammer ablenkt und/oder biegt.

10. Brennkammer (26) nach einem der Ansprüche 1 bis 8, **dadurch gekennzeichnet, dass** in der Rippe (21) eine Öffnung (23) vorgesehen ist, um eine Querströmung von einem ersten Abschnitt des Kühlkanals an einer Seite der Rippe (21) zu einem zweiten Abschnitt des Kühlkanals an der anderen Seite der Rippe (21) zu ermöglichen.

11. Gasturbine (1), umfassend einen Verdichter (3), eine Combustoranordnung (4) und eine Turbine (5), **dadurch gekennzeichnet, dass** die Combustoranordnung (4) eine Vielzahl von Brennkammern (26) nach einem der Ansprüche 1 bis 10 umfasst.

12. Gasturbine (1) nach Anspruch 11, **dadurch gekennzeichnet, dass** die Brennkammern (26) in Umfangsrichtung um die Achse (2) der Gasturbine (1) verteilt sind, wobei die Haupteinlassöffnungen (17) der Achse (2) der Gasturbine (1) zugewandt sind, und dadurch, dass die Gasturbine (1) einen dem Verdichter (3) nachgeschalteten Diffusor (19) mit einem Auslass in Richtung der Haupteinlassöffnungen (17) umfasst, so dass das während des Betriebs der Gasturbine (1) aus dem Diffusor (19) austretende verdichtete Gas auf die Haupteinlassöffnung (17) aufprallt.

13. Gasturbine (1) nach Anspruch 11, **dadurch gekennzeichnet, dass** die Gasturbine (1) einen zweiten Diffusor (24) umfasst, der einen Teil des Ausgangsgases des Verdichters zu den Brennern (25) der Gasturbine (1) leitet.

## Revendications

1. Chambre de combustion (26) comprenant une section manchon (15) qui enferme en partie au moins une paroi de canalisation (10) destinée à guider des gaz de refroidissement (16) dans un canal entre la section manchon (15) et la paroi de canalisation (10) le long de la surface extérieure de la paroi de canalisation (10), dans laquelle la paroi de canalisation (10) guide un écoulement de gaz chauds (9) dans un chemin d'écoulement de gaz chauds qui présente une extrémité amont et une extrémité aval au cours du fonctionnement, **caractérisée en ce que** la section manchon (15) présente une ouverture d'entrée principale (17) qui fait face à la paroi de canalisation (10) en s'éloignant de celle-ci, dans laquelle l'aire de la section transversale de l'ouverture d'entrée principale (17) est supérieure à 70 % de la somme des sections transversales de toutes les ouvertures de refroidissement vers la section manchon (15) ;
**caractérisée en ce qu'**une nervure (21) destinée à guider les gaz de refroidissement (16), est agencée dans le canal entre le manchon (15) et la paroi de canalisation (10), dans laquelle la nervure (21) s'étend en partie au moins dans une direction circonférentielle autour de la chambre de combustion de façon à guider les gaz de refroidissement (16) à partir du côté de l'ouverture d'entrée principale (17) vers un côté opposé de la chambre de combustion (4).

2. Chambre de combustion (26) selon la revendication 1, **caractérisée en ce que** l'ouverture d'entrée principale (17) est la seule ouverture de refroidissement vers la section manchon (15).

3. Chambre de combustion (26) selon la revendication 1 ou la revendication 2, **caractérisée en ce que** l'ouverture d'entrée principale (17) est orientée vers un côté de la chambre de combustion (4).

4. Chambre de combustion (26) selon l'une quelconque des revendications 1 à 3, **caractérisée en ce que** l'orientation de l'ouverture d'entrée principale (17) est perpendiculaire à une extension axiale de la chambre de combustion (4).

5. Chambre de combustion (26) selon l'une quelconque des revendications 1 à 4, **caractérisée en ce que** l'ouverture d'entrée principale (17) présente l'une d'une forme circulaire, rectangulaire, triangulaire ou de haricot.

6. Chambre de combustion (26) selon l'une quelconque des revendications 1 à 5, **caractérisée en ce que**, à partir de l'ouverture d'entrée principale (17), la hauteur du canal de refroidissement entre le manchon (15) et la paroi de canalisation (10), décroît dans la direction circonférentielle autour de la chambre de combustion et / ou dans la direction axiale de la chambre de combustion.

7. Chambre de combustion (26) selon l'une quelconque des revendications 1 à 6, **caractérisée en ce que** l'ouverture d'entrée principale (17) comprend un pavillon d'entrée (18) destiné à récupérer la pression dynamique des gaz de refroidissement qui pénètrent (16) au cours du fonctionnement.

8. Chambre de combustion (26) selon l'une quelconque des revendications 1 à 7, **caractérisée en ce qu'**un dispositif d'amélioration du transfert de chaleur est appliqué sur la paroi de canalisation (10) et / ou sur la section manchon (15).

9. Chambre de combustion (26) selon l'une quelconque des revendications 1 à 8, **caractérisée en ce que** la nervure (21) détourne et / ou infléchit le chemin des gaz de refroidissement à partir d'une direction circonférentielle autour de la paroi de canalisation (10) vers une direction à contre-courant de la direction d'écoulement principale des gaz chauds (9) dans la chambre de combustion.

10. Chambre de combustion (26) selon l'une quelconque des revendications 1 à 9, **caractérisée en ce qu'**une ouverture (23) est introduite dans la nervure (21) de façon à permettre un écoulement transversal à partir d'une première section du canal de refroidissement d'un côté d'une nervure (21), vers une seconde section du canal de refroidissement de l'autre côté de la nervure (21).

11. Turbine à gaz (1) comprenant un compresseur (3), un agencement de chambre de combustion (4), et une turbine (5), **caractérisée en ce que** l'agencement de chambre de combustion (4) comprend une pluralité de chambres de combustion (26) selon l'une quelconque des revendications 1 à 10.

12. Turbine à gaz (1) selon la revendication 11, **caractérisée en ce que** les chambres de combustion (26) sont réparties de manière circonférentielle autour de l'axe (2) de la turbine à gaz (1), les ouvertures d'entrée principales (17) faisant face vers l'axe (2) de la turbine à gaz (1), et **en ce qu'**elle comprend un dispositif de diffusion (19) situé à la suite du compresseur (3) dont une sortie est dirigée vers les ouvertures d'entrée principales (17), de telle sorte que, au cours du fonctionnement de la turbine à gaz (1), les gaz comprimés qui sortent du dispositif de diffusion (19), agissent sur l'ouverture d'entrée principale (17).

13. Turbine à gaz (1) selon la revendication 11, **caractérisée en ce qu'**elle comprend un second dispositif de diffusion (24) destiné à diriger une partie des gaz de sortie du compresseur vers les brûleurs (25) de la turbine à gaz (1).
